# EUROPEAN PATENT APPLICATION

(11) **EP 3 243 711 A1**
(43) Date of publication of application: **15.11.2017**
(21) Application number: 16168871.8
(22) Date of filing: 10.05.2016
(51) Int. Cl.: B60R 22/20, B60R 13/02, B60R 22/24, B60R 11/00, F16B 5/06

(54) **GUIDING FASTENER**

(71) Applicant: Grupo Antolin Ingenieria, S.A.U., 09007 Burgos (ES)
(72) Inventor: Tschank, Andreas, 2435 Ebergassing (AT); Reil, Markus, 2435 Ebergassing (AT)
(74) Representative: Vinazzer, Edith

(57) **Abstract**

Guiding fastener (1) for attaching a first component in slidable manner to a second component, wherein the guiding fastener (1) includes a base part (2) and clamping legs (3) that are connected thereto and extend along one side of said base part (2), which clamping legs together with the base part (2) form a clamping element for attaching the guiding fastener to the second component, wherein one sliding leg (4, 5) projects from the other side of the base part (2).

The sliding leg (4) forms together with at least one further sliding leg (5) projecting on the same side of the base part (2) a slide guide for the first component between the sliding legs (4, 5).

## Description

The invention relates to a guiding fastener for attaching a first component in slidable manner to a second component, wherein the guiding fastener includes a base part and clamping legs that are connected thereto and extend along one side of said base part, which clamping legs together with the base part form a clamping element for attaching the guiding fastener to the second component, and wherein a sliding leg projects from the other side of the base part, for guiding the movement of the second component with regard to the first component.

Such a guiding fastener is known for example from DE 101 56 508 A1. That guiding fastener has a base part furnished with clamp legs with a clamping gap between the clamp legs and the base part, so that the guiding fastener can be attached firmly to a component. Barbs provided on the clamp legs hook into this component and help to attach the guiding fastener firmly. One leg projecting at right angles from the second side of the base part supports an edge area of the second component, which remains slidable, from the outside. In order to enable this component to slide noiselessly and without freeplay, the edge area thereof is enclosed by a textile material, for example a strip of non-woven fabric, essentially in a U-configuration. In the disclosed embodiment an interior trim element of a motor vehicle is the component to which some guiding fasteners are attached immovably, the component that is slidable relative thereto is a seatbelt slider .The guiding of the sliding movement of the seatbelt slider results from the coaction of the guiding fastener with edge areas of the trim element and the seatbelt slider in a slidable manner allowing the necessary lateral retention for guiding the sliding movement of the seatbelt slider, thus limiting the freedom of design of both, the trim element and the seatbelt slider. By combining the guiding fasteners in the above mentioned manner the trim element and the seatbelt slider interfere with each other thereby limiting the design possibilities of the seatbelt slider and complicating the design of the involved components of the whole assembly, namely the seatbelt slider and the trim element.

Further the necessary enclosure of the peripheral edge of the seatbelt slider is complicated and expensive, and there is a desire to create an arrangement that can be displaced or moved in sliding manner more easily and inexpensively.

The object underlying the invention is therefore to improve or design a guiding fastener of the kind described above in such manner that an enclosure of the edge area of the slidably attached component may be dispensed with, yet convenient movement without noise or freeplay is still assured and the design of both components, in particular of their respective peripheral edges, can be simplified.

The object as stated is solved according to the invention in that the sliding leg forms together with at least one further sliding leg projecting on the same side of the base part a slide guide for the first component between the sliding legs.

The guiding fastener in the design according to the invention thus solves the stated object in a particularly simple and practical manner, wherein the guiding fastener comprises at least two sliding legs producing a slide guide for movement of the one component relative to the other without noise or freeplay.

In a preferred embodiment of the invention, the sliding legs project from the base part essentially at a right angle thereto, so that the forces acting on the guiding fastener when the first component is moved in sliding manner may be absorbed and distributed effectively.

Since the slide guide is formed between sliding legs of the guiding fastener, a precise sliding movement of the component concerned is improved if all said sliding legs extend parallel to each other.

In a particularly simple embodiment of the guiding fastener, two sliding legs are provided to form the slide guide, which are positioned opposite one another.

In an alternative embodiment of the guiding fastener, at least two sliding legs may be provided that are offset with respect to one another in the sliding direction. This configuration also assists with the precise sliding movement of the component concerned.

In a further embodiment of the invention, preferably at least the two sides or areas of the sliding legs forming the slide guide that are facing one another as well as at least the area of the base part that is immediately adjacent to each are furnished with a coating of yielding material. The coating ensures a particular smooth and noiseless movement and prevents free play. Further the coating avoids the need of separate and expensive covers on the edge areas of the first or the second component.

In order to guarantee that the noise-reducing properties of the coating are long-lasting, it is advantageous if the material thereof is elastically yielding.

Various materials lend themselves well for use as the coating of the sliding legs. In a preferred design, the coating comprises flock, in particular as a flocked material, flocked strips for example. Designs in which the coating consists of rubber or plastic are also possible and advantageous. Particularly effective noise-reducing coatings may be made from foamed rubber or plastic foam.

The coatings may be connected to the sliding legs in various ways. In one of these variants, the coating may be affixed to the guiding fastener by adhesion, but the corresponding guiding fastener parts, particularly the sliding legs, may also be overmoulded with a layer of plastic, or the coating may be a mounted plastic or rubber part.

A particularly advantageous use of the guiding fasteners according to the invention is as the slidably movable arrangement of a seatbelt slider on an interior trim element of a motor vehicle.

Further features, advantages and particularities of the invention will now be described in greater detail with reference to the drawing, which shows several embodiments.

In the drawing
Fig. 1 is an oblique view of an embodiment of a guiding fastener according to the invention,
Fig. 2a is a side view of the guiding fastener of Fig. 1, Fig. 2b is a side view of the guiding fastener of Fig. 1 in an embodiment with a coating,
Fig. 3 is an oblique view of a further embodiment of a guiding fastener according to the invention,
Fig. 4a is a side view of the guiding fastener of Fig. 3, Fig. 4b is a side view of the guiding fastener of Fig. 3 in an embodiment with a coating,
Fig. 5 is an oblique view of a third embodiment of a guiding fastener according to the invention,
Fig. 6a is a side view of the guiding fastener of Fig. 5, Fig. 6b is a side view of the guiding fastener of Fig. 5 in an embodiment with a coating,
Fig. 7 shows a possible use of a guiding fastener according to Fig. 2b on an interior trim element of a motor vehicle and
Fig. 8 shows an enlarged detail from Fig. 7.

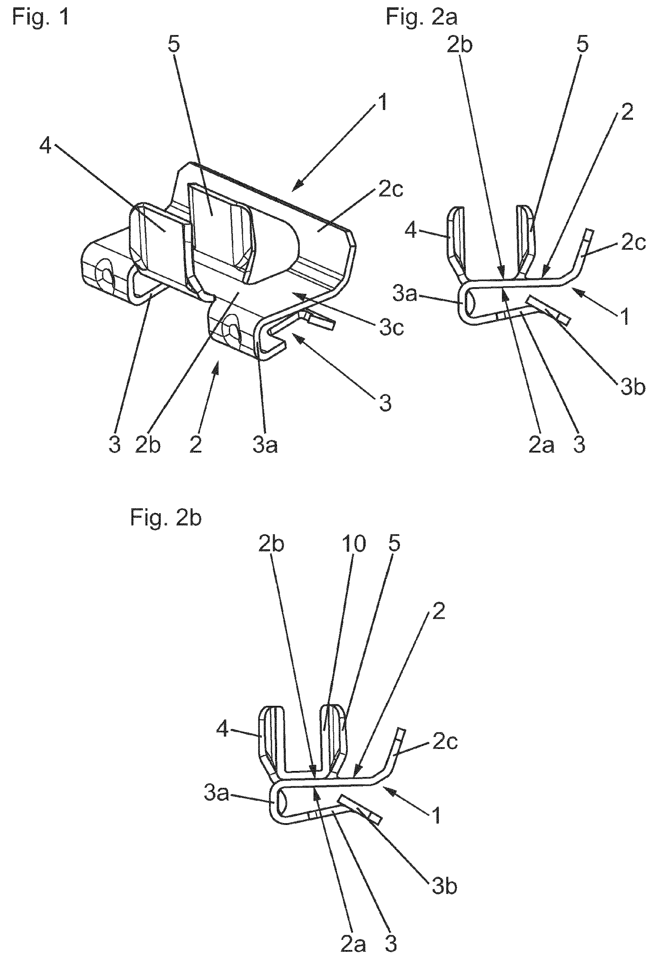

The figures show embodiments of a guiding fastener 1 having an elongated base part 2 with a raised section 2c on one longitudinal side. Apart from the raised section 2c, the base part is in the form of a plate, and has two sides 2a and 2b (lower and upper side). Two sections 3a extend from the other longitudinal side of the base part 2 and are bent through somewhat more than 180° and terminate as clamp legs 3, which cooperate with the base part 2 to form an elastic clamping element. A clamp gap is formed between each of the sides 2a of the base part 2 that are facing the clamp legs 3 and the clamp legs 3, the width of which gap varies according to the material thickness of the component on which the guiding fastener is to be arranged in fixed, immovable manner. The clamp legs 3 have end sections 3b that are bent at an obtuse angle in such manner that they point away from the base part 2. The outer side of each end section 3b is preferably furnished with a sharp barb 3c, wherein the barbs 3c point toward the base part 2, as is shown by the side views of Figs 2a, 2b, 4a, 4b, 6a and 6b. Both clamp legs 3 are also provided on the lengthwise end areas of the base part 2 and are arranged at a distance from each other.

In all embodiments first and second sliding legs 4, 5 on the second side 2b of the base part 2 project away from said base part substantially at right angles thereto and parallel to each other, forming a slide guide between them. The sliding legs 4, 5 are preferably in a substantially plate-like form. At least each first sliding leg 4 projects away from base part 2 in the area of the longitudinal side of the base part 2 and between the bent sections 3a. Either the coating 10 or the "inner" sides of the sliding legs 4, 5 and the base part 2 contact the component that is to be arranged in a slidable manner.

In the embodiments shown in Figs 1, 2a and 2b, a single second sliding leg 5 is located opposite the first sliding leg 4. If no additional coating 10 is provided the two sliding legs 4, 5 extending parallel to one another are positioned at a distance from one another that is adapted to the material thickness of the component that is to be arranged in slidable manner on the guiding fastener 1 and opposite the component that is to be attached immovably thereto. In the embodiment comprising a coating 10 the distance between the sliding legs 4, 5 will be adapted as well.

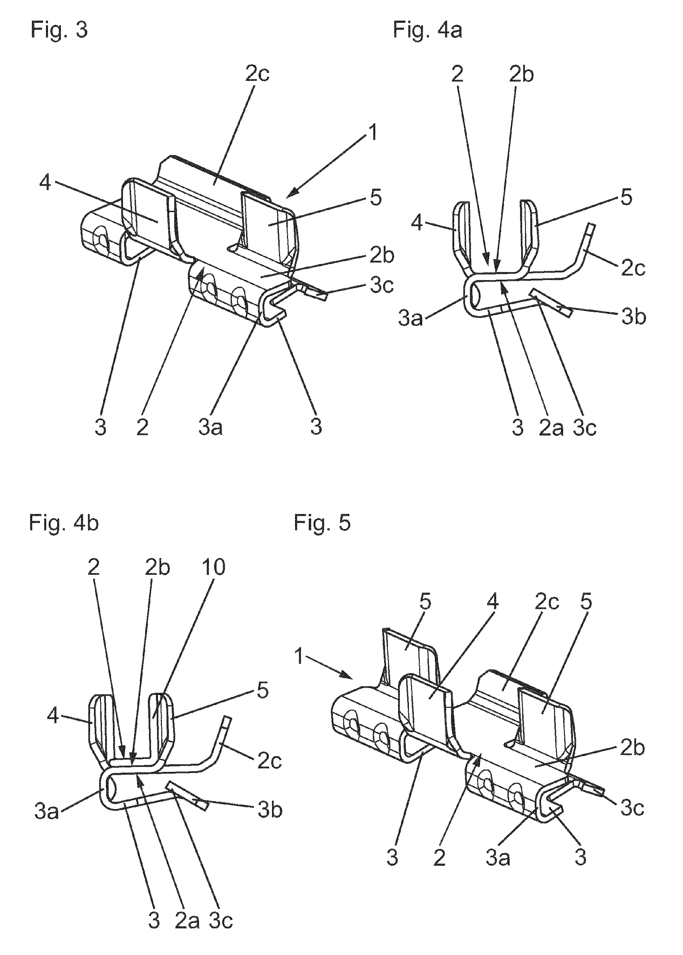

In the embodiments shown in Figs 3, 4a and 4b, the second sliding leg 5 is offset relative to the first sliding leg 4 in the longitudinal direction of the base part 2. In these embodiments as well, both sliding legs 4, 5 are positioned at a distance from one another when viewed at right angles to the extension thereof, which distance is adapted to the material thickness of the component that is to be arranged in slidable manner, so that the sliding legs 4, 5 form a slide guide therefor. This way the sliding legs 4, 5 retain the edge 7b of the sliding component 7 preventing any undesirable lateral movement of the sliding component, in particular in any direction transversal to the sliding direction.

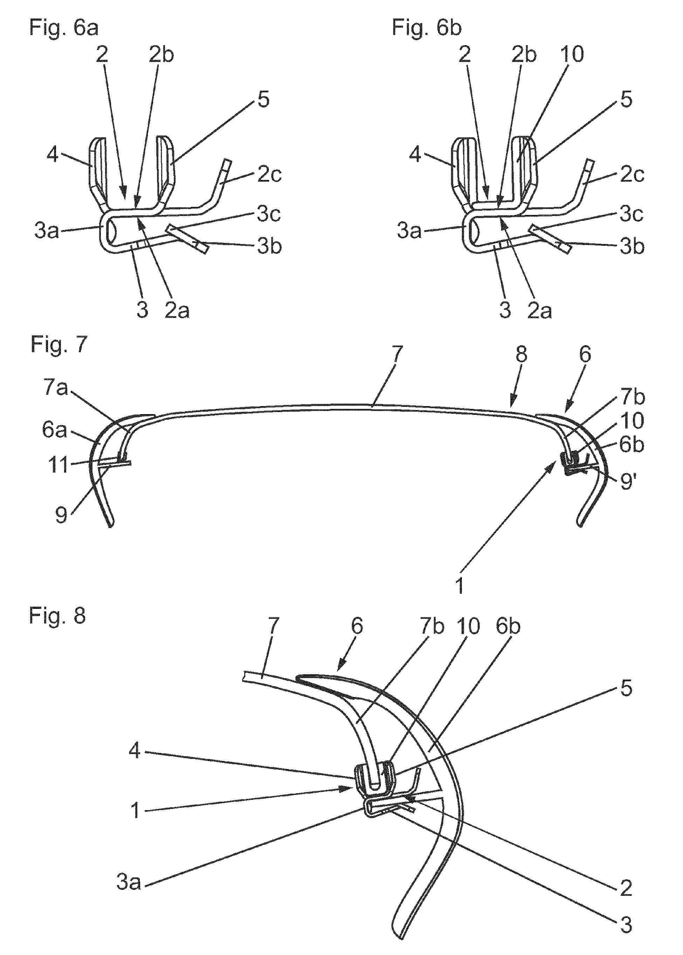

Fig. 5, Fig. 6a and 6b show embodiments in which two second sliding legs 5 are provided. The two second sliding legs 5 are in alignment with one another and offset relative to the sliding leg 4 in the longitudinal direction of the base part 2. Similarly to the embodiments of Figs 3 and 4, a slide guide is formed between the sliding leg 4 and the two sliding legs 5.

In the embodiments shown in Figs 2b, 4b and 6b the coating 10 is made of a yielding material, particularly an elastically yielding material. The sliding legs 4, 5 may also be enclosed in a material of such kind. For example, a coating 10 of flock or flocked covers for example, which are attached in particular by adhesive, also coatings 10 made from foamed rubber, a plastic foam and the like are suitable. It is also possible to overmould the sliding legs 4, 5 and the base part 2 with a suitable plastic. The coating 10 may also be a rubber or plastic part that is glued on, in particular on those areas of the guiding legs 4, 5 which contact the slidable component. In the variant shown in Fig. 2b the coating may extend in a U shape, for example, along and in contact with the inner sides of the sliding legs 4, 5 and with the area of the base part 2 that extends between the legs. If a coating 10 is provided, the clearance between the sliding legs 4, 5 is selected correspondingly larger.

Fig. 7 and Fig. 8 illustrate a preferred use of the guiding fasteners 1 according to the invention and in the embodiment according to Figs 2b, wherein a guiding fastener 1 furnished with a coating 10 is represented. These figures show a cross section through a plastic interior trim element 6 of a motor vehicle, which part is provided for instance to cover a B-pillar in the interior of a motor vehicle. The interior trim element 6 is that component to which some guiding fasteners 1 are attached immovably, as will be described in the following. The component that is slidable relative thereto is a seatbelt slider 7, also made of plastic, and arranged so as to be slidable upwards and downwards relative to the motor vehicle, around which a safety belt is folded back on itself. The seatbelt slider 7 enables the belt reversing point to be adjusted to the physical size of a vehicle passenger. The size of the adjustment range is determined by the extension of an opening 8 formed in the trim element 6, which opening being covered by the seatbelt slider 7. In the area of this opening 8, the seatbelt slider 7 forms the part in the trim element 6 that is visible from the outside. A grip element may be arranged on the outside of the slider 7, so that the slider 7 may be operated by hand, or provision may be made to enable the slider 7 to be operated automatically. As shown in the sectional diagrams in Figs 7 and 8, the parts 6a, 6b of the interior trim element 6 that delimit the sides of the opening 8 are slightly curved in cross section. A ridge 9 is conformed on each of the opposing inner sides of the parts 6a, 6b and extends along the opening 8 and substantially over the area of the longitudinal extension of the seatbelt slider 7. The seatbelt slider 7 has edge areas 7a, 7b having a curved lateral cross section, with which it is inserted below the side parts 6a, 6b of the trim element 6.

The peripheral edge of the edge area 7a of the seat belt slider 7 is furnished with a soft enclosure 10 and is merely supported on the ridge 9, which is shown on the left in Fig. 7.

Fasteners 1 and the clamping elements thereof are fixedly clamped to the ridge 9 on the right in Fig. 7, with spaces between them of a few centimetres. The barbs 3c hook into the plastic of the prong 9. The second edge area 7b of the seatbelt slider 7 is located in the slide guide between each of the sliding legs 4, 5 of the guiding fasteners 1, in contact with the coating 10. This design of the fasteners 1 in particular enables the seatbelt slider 7 to be moved without freeplay, smoothly and noiselessly.

The guiding fasteners 1 are preferably made from metal, but they may also be produced from plastic as injection moulded parts. The guiding fasteners 1 further have dimensions in the order of 7 mm up to 15 mm.

### List of reference signs

- 1: Guiding fastener
- 2: Base part
- 2a, 2b: Side
- 2c: Section
- 3: Clamp leg
- 3a: Curved section
- 3b: End section
- 3c: Barb
- 4: Sliding leg
- 5: Sliding leg
- 6: Trim element
- 6a, 6b: Side part
- 7: Seatbelt slider
- 7a, 7b: Edge area
- 8: Opening
- 9, 9': Ridge
- 10: Coating

## Claims

1. Guiding fastener (1) for attaching a first component in slidable manner to a second component, wherein the guiding fastener (1) includes a base part (2) and clamping legs (3) that are connected thereto and extend along one side of said base part (2), which clamping legs together with the base part (2) form a clamping element for attaching the guiding fastener to the second component, wherein at least one sliding leg (4, 5) projects from the other side of the base part (2),
**characterised in that**
the sliding leg (4) forms together with at least one further sliding leg (5) projecting on the same side of the base part (2) a slide guide for the first component between the sliding legs (4, 5).

2. Guiding fastener according to claim 1, **characterised in that** the sliding legs (4, 5) projects from the base part (2) essentially at a right angle thereto.

3. Guiding fastener according to either of claims 1 or 2, **characterised in that** the sliding legs (4, 5) that form a slide guide extend parallel to each other.

4. Guiding fastener according to any one of claims 1 to 3, **characterised in that** two sliding legs (4, 5) are provided, which are positioned opposite one another.

5. Guiding fastener according to any one of claims 1 to 3, **characterised in that** at least two sliding legs (4, 5) are provided, which are offset with respect to one another in the sliding direction.

6. Guiding fastener according to any one of claims 1 to 5, **characterised in that** at least the two sides of the sliding legs (4, 5) forming the slide guide that are facing one another as well as at least the area of the base part (2) that is immediately adjacent to each are furnished with a coating (10) of a yielding material.

7. Guiding fastener according to claim 6, **characterised in that** the material of the coating (10) is elastically yielding.

8. Guiding fastener according to claims 6 or 7, **characterised in that** the material of the coating (10) comprises flock.

9. Guiding fastener according to claims 6 or 7, **characterised in that** the material of the coating (10) consists of rubber or plastic.

10. Guiding fastener according to claim 9, **characterised in that** the coating (10) is made from foamed rubber or plastic foam.

11. Guiding fastener according to claim 9, **characterised in that** the coating (10) is an overmoulded layer of plastic.

12. Use of guiding fasteners (1) according to one or more of claims 1 to 11 for arrangement of a seatbelt slider (7) in slidably movable manner on an interior trim element (6) of a motor vehicle.
